(19) Europäisches Patentamt
European Patent Office
Office européen des brevets

(11) EP 2 038 358 B1

(12) EUROPÄISCHE PATENTSCHRIFT

(45) Veröffentlichungstag und Bekanntmachung des Hinweises auf die Patenterteilung:
**26.12.2012 Patentblatt 2012/52**

(21) Anmeldenummer: **07765637.9**

(22) Anmeldetag: **26.06.2007**

(51) Int Cl.:
***C09J 7/00*** (2006.01) ***C09J 7/02*** (2006.01)

(86) Internationale Anmeldenummer:
**PCT/EP2007/056374**

(87) Internationale Veröffentlichungsnummer:
**WO 2008/000742 (03.01.2008 Gazette 2008/01)**

(54) **KLEBSTOFF-FILM MIT MINDESTENS ZWEI KONTINUIERLICHEN PHASEN**

ADHESIVE FILM WITH AT LEAST TWO CONTINUOUS PHASES

FILM ADHÉSIF AVEC AU MOINS DEUX PHASES CONTINUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.06.2006 EP 06116465**
**30.06.2006 US 817361 P**

(43) Veröffentlichungstag der Anmeldung:
**25.03.2009 Patentblatt 2009/13**

(73) Patentinhaber: **BASF SE**
**67056 Ludwigshafen (DE)**

(72) Erfinder:
- **URBAN, Dieter**
**67346 Speyer (DE)**
- **SCHÖCKER, Petra**
**68642 Bürstadt (DE)**
- **KIRSCH, Stefan**
**55268 Nieder-Olm (DE)**
- **PIETSCH, Ines**
**67346 Speyer (DE)**
- **KUTSCHERA, Michael**
**67117 Limburgerhof (DE)**
- **WEISS, Horst**
**67141 Neuhofen (DE)**
- **BEYERS, Cornelis Petrus**
**67122 Altrip (DE)**

(56) Entgegenhaltungen:
**JP-A- 11 256 125 US-A- 5 670 557**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 038 358 B1

Printed by Jouve, 75001 PARIS (FR)

## Beschreibung

Die vorliegende Erfindung betrifft ein Verfahren zur Herstellung eines Klebstofffilms, der dadurch gekennzeichnet ist, dass er aus mindestens zwei kontinuierlichen Polymerphasen A und B besteht, die jeweils aus einem Polymer oder Polymergemisch A (kurz Polymer A) und einem Polymer oder Polymergemisch B (kurz Polymer B) gebildet werden, und dadurch erhältlich ist, dass mindestens eins der Polymere A oder B zunächst als wässrige Polymerdispersion vorliegt und als solche aufgetragen und verfilmt wird.

Bei Haftklebstoffen ist sowohl eine gute Haftung (Adhäsion) zum Substrat gewünscht als auch eine ausreichende innere Festigkeit in der Klebstoffschicht (Kohäsion). Bei Adhäsion und Kohäsion handelt es sich um entgegengesetzte anwendungstechnische Eigenschaften. Maßnahmen, die eine Verbesserung der Adhäsion bewirken, führen im allgemeinen gleichzeitig zu einer Verschlechterung der Kohäsion und umgekehrt.

Haftklebstoffe auf Basis von wässrigen Polymerdispersionen, welche durch Emulsionspolymerisation erhältlich sind, sind lange bekannt. Insbesondere handelt es sich dabei um Polyacrylate oder Vnylacetat/Ethylen- Copolymerisate. Eine Verbesserung der Adhäsion und Kohäsion wurde bei derartigen Emulsionspolymerisaten bisher durch Auswahl geeigneter Comonomere oder Additive erreicht. Exemplarisch sei auf DE-A 103 23 048 verwiesen, wonach durch Zusatz von Siliziumverbindungen zur Polymerdispersion positive Effekte erzielt werden. Aus EP-A 625 557 sind Haftklebstoffe bekannt, die Hydroxyalkylacrylate enthalten.

Gewünscht sind alternative Verfahren die Adhäsion und Kohäsion von Haftklebstoffen zu verbessern. Die Verfahren sollen möglichst einfach sein, die Verbesserungen der anwendungstechnischen Eigenschaften sollen insbesondere ohne zwingende Mitverwendung von neuen oder teuren Rohstoffen erreicht werden.

Polymerfilme aus mindestens zwei koninuierlich miteinander vermischten Polymerphasen sind als solche bekannt. Bikontinuierliche Polymerphasen werden z. B. S. Kirsch, A Pfau, E.Hädicke und J.Leuninger in Progress in Organic Coatings 45 (2002), 193 - 204 beschrieben.

Aus US 5,670,557 sind Haftklebstoff mit einer bikontinuierlichen Polymerphase bekannt. Bei dem in der US 5,670,557 beschriebene Herstellungsverfahren werden wässrige Mikroemulsionen von Monomeren verwendet. Die emulgierten Teilchen enthalten die hydrophoben Monomere, hydrophile Monomere sind in Wasser gelöst. Die Mikroemulsion wird auf den gewünschten Träger beschichtet, erst danach erfolgt die Polymerisation durch Bestrahlung mit energiereichem Licht direkt auf dem Träger.

Die erhaltenen Haftklebstoffe sollen sich insbesondere für Anwendungen eignen, bei denen eine elektrische Leitfähigkeit des Haftklebstoffs erforderlich ist.

In US 5,356,993 wird die Herstellung von phasenseparierten Klebstoffen, Dichtungen und Beschichtungen durch Beschichten auf einen geeigneten Träger und anschließendes Bestrahlen beschrieben. Das System besteht aus einem epoxidierten Dien-Polymer und einem weiteren Epoxy-Polymer. Polymerdispersionen werden nicht erwähnt.

Aufgabe der vorliegenden Erfindung waren Herstellverfahren für Klebstoffbeschichtungen mit verbesserten anwendungstechnischen Eigenschaften.

Demgemäß wurde das eingangs definierte Herstellverfahren für Klebstoff-filme, insbesondere für Haftklebstofffilme gefunden.

Wesentliches Merkmal der Efindung ist, dass der bikontinuierliche Klebstoff-film dadurch erhältlich ist, dass mindestens eins der Polymere A oder B zunächst als wässrige Polymerdispersion vorliegt und als solche aufgetragen und verfilmt wird.

Zu der bikontinuierlichen Filmstruktur

Zwei unterschiedliche Polymerphasen können in einem Polymerfilm verschiedene Strukturen ausbilden. In jedem Fall ist das Polymer der einen Phase von dem der anderen Phase durch eine Phasengrenzfläche abgetrennt. Zum Beispiel kann das eine Polymer kleine, nicht zusammenhängende Teilchen ausbilden (dispergierte Phase), die in dem anderen Polymer (Matrix, kontinuierliche Phase) verteilt sind. Eine andere Möglichkeit ist, dass beide Polymere eine kontinuierliche Phase ausbilden. In diesem Fall sind beide Polymere über das gesamte betrachtete Gebiet nach Art eines "interpenetrating network" verteilt; keins der Polymeren liegt als dispers verteiltes Teilchen in einer Matrix des anderen Polymeren vor, kurz: beide Polymere bilden eine kontinuierliche Phase aus, der Polymerfilm wird als bikontinuierlich bezeichnet.

Im Rahmen der vorliegenden Erfindung reicht es aus, wenn nur ein Teil des gesamten Polymerfilms bikontinuiertich ist. Die Feststellung der Filmstruktur erfolgt durch Auswertung von hochauflösenden mikroskopischen Aufnahmen. Die Mikroskopie-methode muss dabei so gewählt werden, dass sie geeignet ist, die beiden kontinuierlichen Phasen getrennt darzustellen und somit zu unterscheiden. Besonders geeignet sind die Rasterkraftmikroskopie (AFM) und die Transmissionselektronenmikroskopie (TEM). Der Bildausschnitt der einzelnen Aufnahmen soll zur Feststellung der Filmstruktur das 10 bis 20 fache des mittleren Durchmessers der dispergierten Polymerteilchen betragen.

Vorzugsweise soll eine mikroskopische Aufnahme einer beliebig durch den Film gelegten Querschnittsfläche

mindestens 10 Flächen % Strukturen zweier kontinuierlicher Polymerphasen zeigen; besonders bevorzugt soll eine derartige Aufnahme mindestens 30 Flächen %, ganz besonders bevorzugt mindestens 50 Flächen %, insbesondere 70 Flächen % Strukturen zweier kontinuierlicher Polymerphasen zeigen. In einer besonderen Ausführungsform der vorliegenden Erfindung zeigt eine derartige Aufnahme 85 Flächen % bzw. besteht zu 100 % aus Strukturen zweier kontinuierlicher Polymerphasen.

Zur chemischen Zusammensetzung der Polymeren A und B

Die nachstehenden Ausführungen gelten unabhängig für beide Polymere, soweit nicht konkret auf ein Polymer A oder B Bezug genommen ist.

Als Polymer kommen radikalisch polymerisierte Polymere, Polyester oder Polyaddukte in Betracht.

Bevorzugte Polymere sind erhältlich durch Polymerisation von radikalisch polymerisierbaren Verbindungen (Monomere). Besonders bevorzugt sind Polymere, die zu mindestens 40 Gew.-%, besonders bevorzugt zu mindestens 60 Gew.-%, ganz besonders bevorzugt zu mindestens 80 Gew.-% aus sogenannten Hauptmonomeren bestehen.

Die Hauptmonomeren sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol o- und p-Methylstyrol, o-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren, Ethylen oder Propylen genannt. Aus Butadien oder Isopren erhaltene Polymere oder Copolymere können auch nachträglich hydriert werden.

Als Hauptmonomere bevorzugt sind Vinylester, vorzugsweise Vinylacetat, insbesondere auch in Kombination mit Ethylen (kurz Vinylacetat/Ethylen-Copolymere), Butadien, insbesondere auch in Kombination mit Styrol (kurz Butadien/Styrol-Copolymere) und die $C_1$- bis $C_{10}$-Alkylacrylate und -methacrylate, insbesondere $C_1$- bis $C_8$-Alkylacrylate und -methacrylate (kurz Polyacrylate) wobei Polyacrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere $C_1$-$C_{10}$-Hydroxyalkyl(meth)acrylate, (Meth)acrylamid und Ureidogruppen enthaltende Monomere wie Ureido(meth)acrylate.

Als weitere Monomere seien darüber hinaus Phenyloxyethylglykolmono- (meth-) acrylat, Glycidylacrylat, Glycidylmethacrylat, Amino- (meth-)acrylate wie 2-Aminoethyl-(meth-)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern. In Betracht kommen insbesondere auch cyclische Lactame wie N-Vinylpyrrolidon oder N-Vinylcaprolactam.

In Betracht kommen auch Polymere, deren Klebstoff-Eigenschaften durch photochemische Vernetzung, z. B. durch Bestrahlung mit Elektronenstrahlen oder UV Licht eingestellt werden können.(acResin® der BASF).

Photochemisch vernetzbar ist das Polymer z. B. wenn Wasserstoffprotonen von der Polymerhauptkette photochemisch, insbesondere auch unter Verwendung eines Fotoinitiators oder durch Elektronenstrahlen abgetrennt werden können, so dass ein Radikal entsteht, welches weitere chemische Reaktionen eingehen kann.

Der Klebstoff kann dazu einen Fotoinitiator enthalten.

Beim Fotoinitiator kann es sich z. B. um sogenannte $\alpha$-Spalter handeln, das sind Fotoinitiatoren, bei denen eine chemische Bindung gespalten wird, so dass 2 Radikale entstehen, die die weiteren Vernetzungs- oder Polymerisationsreaktionen initiieren.

Genannt seien z. B. Acylphosphinoxide (Lucirin® Marken der BASF), Hydroxyalkylphenone (z. B. Irgacure®

184), Benzoinderivate, Benzilderivate, Dialkyloxyacetophenone.

Insbesondere kann es sich um sogenannte H-Abstraktoren handeln, welche ein Wasserstoffatom von der Polymerkette ablösen, z. B. handelt es sich hierbei um Photoinitiatoren mit einer Carbonylgruppe. Diese Carbonylgruppe schiebt sich in eine C-H Bindung unter Ausbildung einer C-C-O-H Gruppierung.

Genannt seien hier insbesondere Acetophenon, Benzophenon und deren Derivate.

Es können beide Klassen von Fotoinitiatoren allein oder auch im Gemisch verwendet werden. Vorzugsweise handelt es sich um H-Abstraktoren als Fotoinitiator.

Der Fotoinitiator oder zumindest einer der Fotoinitiatoren, falls ein Gemisch verwendet wird, kann an das Klebstoff-Polymer gebunden sein.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder Methacrylgruppe.

Geeignete copolymerisierbare Fotoinitiatoren sind Acetophenon- oder Benzophenonderivate, welche mindestens eine, vorzugsweise eine, ethylenisch ungesättigte Gruppe enthalten. Bei der ethylenisch ungesättigten Gruppe handelt es sich vorzugsweise um eine Acryl- oder Methacrylgruppe.

Eine photochemische Vernetzung bzw. die Mitverwendung von Fotoinitiatoren ist im Rahmen der vorliegenden Erfindung nicht notwendig, auf eine derartige Vernetzung oder Mitverwendung kann daher verzichtet werden.

Die Glasübergangstemperatur (Tg) der Polymeren A und B liegt vorzugsweise jeweils im Bereich von -75 bis +50 °C.

Die Glasübergangstemperatur wird nach der Fox-Gleichung aus der Glasübergangstemperatur, der Homopolymerisate der im Copolymerisat vorhandenen Monomeren und deren Gewichtsanteil berechnet:

$$1/Tg = xA/TgA + xB/TgB + .xC/TgC + ........$$

Tg: berechnete Glasübergangstemperatur des Copolymeren
TgA: Glasübergangstemperatur des Homopolymeren von Monomer A
TgB, Tg entsprechend für Monomere B, C, etc.
xA: Masse Monomer A/Gesamtmasse Copolymer,
xB, xC entsprechend für Monomere B, C etc.

Die Fox-Gleichung ist in üblichen Fachbüchern angegeben, z. B. auch in Handbook of Polymer Science and Technology, New York, 1989 by Marcel Dekker, Inc.

Vorzugsweise unterscheidet sich die Glasübergangstemperatur der beiden Polymere A und B um mindestens 10 °C, besonders bevorzugt um mindestens 12 °C und ganz besonders bevorzugt um mindestens 15 °C (Tg bestimmt nach der Fox-Gleichung).

Die Tg von Polymer A liegt vorzugsweise im Bereich von -75 bis 0°C, besonders bevorzugt von -60 bis -10 °C und ganz besonders bevorzugt von -60 bis -30 °C; die Tg von Polymer B liegt vorzugsweise im Bereich von -60 bis +50 °C, besonders bevorzugt im Bereich von -45 bis +40 °C und ganz besonders bevorzugt von -30 bis +40 °C.

Insbesondere ist auch ein Polymer A oder B hydrophiler ist als das andere. Insbesondere enthält das hydrophilere Polymer hydrophile Monomere.
Als hydrophile Monomere kommen z. B. Monomere mit nur kurzen Kohlenwasserstoffgruppen mit maximal 3 C Atomen, besonders bevorzugt Methylacrylat oder Methylmethacrylat, oder Monomere mit hydrophilen funktionellen Gruppen, z. B. Hydroxy-, Amino-, Nitril-, Säure- oder Säureanhydridgruppen, oder deren Mischungen in Betracht.

In einer bevorzugten Ausführungsform beruht die Hydrophilie auf dem Gehalt an hydrophilen funktionellen Gruppen. Vorzugsweise hat daher das hydrophilere Polymer einen Gehalt an hydrophilen funktionellen Gruppen von 0,001 bis 1,0 mol/100 g Polymer, besonders bevorzugt 0,001 bis 0,5 und ganz besonders bevorzugt 0,01 bis 0,5 mol/100g Polymer und insbesondere 0,05 bis 0,5 mol/100g Polymer.

Falls das weniger hydrophile Polymer auch einen Gehalt an derartigen hydrophilen Gruppen hat, so beträgt der Gehalt im allgemeinen weniger als die Hälfte, besonders bevorzugt weniger als ein Viertel des Gehalts dieser Gruppen im hydrophileren Polymer.

In einer anderen bevorzugten Ausführungsform beruht die Hydrophilie auf dem Gehalt an hydrophilen Monomeren ohne funktionellen Gruppen (siehe oben, z. B. Methylacylat oder Methylmethacrylat). Vorzugsweise hat daher das hydrophilere Polymer in dieser Ausführungsform einen Gehalt dieser Monomeren, während das weniger hydrophile Polymer maximal die Hälfte davon, besonders bevorzugt maximal ein Viertel davon hat und ganz besonders bevorzugt diese Monomeren gar nicht enthält.

Zubereitungsform und Herstellung der Polymere

Wesentliches Merkmal der Erfindung ist, dass mindesens eins der Polymere A oder B als wässrige Polymerdispersion vorliegt und als solche aufgetragen und verfilmt wird.

Das andere Polymer A oder B kann als Lösung in einem geeigneten Lösungsmittel, vorzugsweise Wasser, mit Wasser mischbare Lösemittel oder deren Mischungen, als 100 % System, d. h. im wesentlichen wasserfrei und lösemittelfrei (Restgehalt Wasser und/oder Lösemittel vorzugsweise kleiner 5 Gew. %, insbesondere kleiner 2, bzw. kleiner 1 Gew. %) oder auch als wässrige Polymerdispersion vorliegen.

Die wässrige Polymerdispersion des Polymeren A oder B kann z. B. durch Emulsionspolymerisation oder Dispergieren des Polymeren A bzw. B in Wasser (Sekundärdispersion) erhalten werden.

Vorzugsweise wird die wässrige Polymerdispersion des Polymeren A oder B durch Emulsionspolymerisation erhalten, es handelt sich daher um ein Emulsionspolymerisat.

Besonders bevorzugt liegen beide Polymere A und B als wässrige Dispersion vor, insbesondere werden beide Polymere A und B durch Emulsionspolymerisation erhalten.

Vor der Verfilmung werden die Polymeren A und B, bzw. die Dispersionen oder Lösungen, die A bzw. B enthalten, vorzugsweise vermischt, so dass die Polymere A und B homogen in der erhaltenen Mischung verteilt sind.

In einer besonders bevorzugten Ausführungsform wird eine wässrige Polymerdispersion verfilmt , die dispergierten Polymerteilchen mit Domänen von Polymer A und Polymer B enthalten (kurz strukturierte Polymerteilchen).

Derartige strukturierte Polymerteilchen sind durch mehrstufig Emulsionspolymerisation erhältlich; hier entfällt dann natürlich die Notwendigkeit eines Vermischens.

Verfahren zur Herstellung der Polymeren sind allgemein bekannt.

Die Polymeren können durch Copolymerisation der Monomeren unter Verwendung der üblichen Polymerisationsinitiatoren sowie gegebenenfalls von Reglern hergestellt werden, wobei man bei den üblichen Temperaturen in Masse, in Emulsion, z. B. in Wasser oder flüssigen Kohlenwasserstoffen, oder in Lösung polymerisiert. Die Polymerisation, z. B. Massepolymerisation kann auch in einem Extruder durchgeführt werden.

Bevorzugt ist die Emulsionspolymerisation.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Schutzkolloide in Betracht kommen z. B. amphiphile Polymere, also Polymere mit hydrophoben und hydrophilen Gruppen. Es kann sich um natürliche Polymere, wie Stärke oder um künstliche Polymere, wie hydrophil modifizierte Polyolefine, z. B. Acrylsäure/Ethylen-Copolymere handeln. Als Emulgatoren kommen sowohl an-ionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C8-bis C36), ethoxylierte Mono-, Di- und Tri-Alkylphenole (EO-Grad: 3 bis 50, Alkylrest: $C^4$- bis $C_9$), Alkalimetallsalze von Dialkylestern der Sulfobernsteinsäure sowie Alkali- und Ammoniumsalze von Alkyl-sulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel II

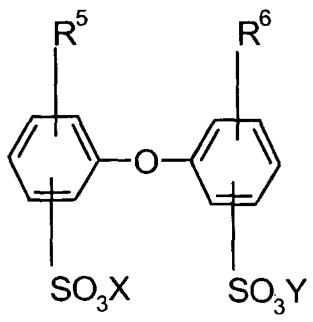

(II)

worin $R^5$ und $R^6$ Wasserstoff oder $C_4$- bis $C_{14}$-Alkyl bedeuten und nicht gleichzeitig Wasserstoff sind, und X und Y

Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. In einer besonders bevorzugten Ausführungsform werden Schutzkolloide, vorzugsweise in Mengen von 0 bis 30 Gew.-Teilen, besonders bevorzugt von 10 bis 20 Gew.-Teilen auf 100 Gew.-Teile der zu polymerisierenden Monomeren verwendet.

Die grenzflächenaktiven Substanzen insgesamt (also Emulgatoren und Schutzkolloide) werden vorzugsweise in Mengen von 0,1 bis 35 Gew.-Teile, vorzugsweise 0,2 bis 30 Gew.-Teile bezogen auf 100 Gew.-Teile der zu polymerisierenden Monomeren verwendet.

Schutzkolloide werden vorzugsweise bei der Emulsionspolymerisation vorgelegt, während Emulgatoren ggb. zusammen mit den Monomeren auch im Laufe der Polymerisation zugeführt werden können.

Wasserlöslichen Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations (Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die Molmasse verringert wird. Geeignet sind z. B. Verbindungen mit einer Thiolgruppe wie tert.-Butylmercaptan, Thioglycolsäureethylester, Mercaptoethanol, Mercaptopropyltrimethoxysilan oder tert.-Dodecylmercaptan.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Polymere A und B liegen, wie oben beschrieben, als strukturierte Polymerteilchen (mit Domänen von A und B) in wässriger Dispersion vor. Derartige Teilchen werden insbesondere durch mehrstufige Emulsionspolymerisation erhalten.

Die Polymerisation erfolgt vorzugsweise in zwei zeitlich aufeinanderfolgenden Stufen, wobei sich die einzelnen Stufen in der Monomerzusammensetzung (gemäß Polymer A bzw B) unterscheiden.

Bei der mehrstufigen Polymerisation erfolgt die Polymerisation der Monomeren der einzelnen Stufen während oder unmittelbar nach der Zugabe der Monomeren zum Polymerisationsgemisch. Das heißt, dass während oder unmittelbar nach der Zugabe der Monomeren die Bedingungen so sind, dass die zugegebenen Monomeren polymersieren. Insbesondere sollte dazu ein Initiator zugegen sein und die Temperatur ausreichend hoch sein. Besonders bevorzugt wird zeitgleich mit der Monomerzugabe Initiator zugesetzt. Falls die Monomeren einer Stufe über einen längeren Zeitraum kontinuierlich zugeführt werden, wird vorzugsweise während mindestens dem gleichen Zeitraum Initiator zugeführt. Da die zugeführten Monomeren während oder unmittelbar nach Zugabe polymerisieren, kommt es nicht zu der z. B. in EP-A 1 420 055 beschriebenen Quellungspolymerisation.

Zur Entfernung der Restmonomeren wird üblicherweise auch nach dem Ende der eigentlichen Emulsionspolymerisation Initiator zugesetzt.

Bei der Emulsionspolymerisation werden wässrige Dispersionen des Polymeren A bzw. B bzw. der strukturierten Polymerteilchen mit Feststoffgehalten von 15 bis 75 Gew.-%, bevorzugt von 40 bis 75 Gew.-% erhalten.

Der mittlere Teilchendurchmesser (Teilchengröße) der dispergierten Polymerteilchen ist vorzugsweise kleiner 400 nm, insbesondere kleiner 300 nm, er ist im allgemeinen größer 50 nm, insbesondere größer 80 nm, besonders bevorzugt größer 100 nm. Besonders bevorzugt liegt die mittlere Teilchengröße zwischen 140 und 250 nm.

Unter mittlerem Teilchendurchmesser Teilchengröße wird hier der d50-Wert der Teilchengrößenverteilung verstanden, d. h. 50 Gew.% der Gesamtmasse aller Teilchen haben einen kleineren Teilchendurchmesser als der d50-Wert. Die Teilchengrößenverteilung kann in bekannter Weise mit der analytischen Ultrazentrifuge (W. Mäschtle, Makromolekulare Chemie 185 (1984), Seite 1025 - 1039) bestimmt werden.

Der pH-Wert der Polymerdispersion wird vorzugsweise auf pH größer 2 insbesondere auf einen pH-Wert zwischen 4 und 8 eingestellt.

Weitere Bestandteile der Polymerphase A und B und allgemeines zu Polymerphasen A und B

Die Polymerphase A kann neben dem Polymer A und die Polymerphase B kann neben dem Polymer B weitere Bestandteile enthalten.

Genannt seien z.B. Zusatzstoffe wie Füllstoffe, Farbstoffe, Verlaufsmittel, Verdicker und weichmachende Harze (tackifier).

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Polymerphasen A bzw. B bestehen vorzugsweise zu mehr als 50 Gew. %, besonders bevorzugt zu mehr als 70 Gew.-% und ganz besonders bevorzugt zu mehr als 90 Gew.-% aus dem Polymer A bzw. B.

Falls ein Tackifier mitverwendet wird, befindet sich dieser vorzugsweise in der Polymerphase, welche das Polymer mit der tiefern Tg enthält.

Die weiteren Bestandteile können den Zubereitungen (Dispersionen, Lösungen) der Polymeren A oder B oder der strukturierten Polymerteilchen zugegeben werden.

Der Anteil der Polymerphasen A und B im gesamten Klebstoff-film kann über große Bereiche variiert werden. Vorzugsweise ist der Anteil der Polymerphase A und B jeweils 5 bis 95 Gew.-%, besonders bevorzugt 10 bis 90 Gew.-% , ganz besonders bevorzugt 20 bis 80 Gew.-% und in einer besonderen Ausführungsform 30 bis 70 Gew.-% oder insbesondere 40 bis 60 Gew.%.

Herstellung des Klebstoff-films mit Polymerphasen A und B

Die Polymerphasen A und B bilden sich durch Verfilmung der Zubereitungen, welche die Polymere A bzw B oder die strukturierten Polymerteilchen und ggb die weiteren Zusatzstoffe enthalten, aus.

Die Zubereitung kann durch übliche Methoden, z. B. durch Rollen, Rakeln, Streichen etc. auf Träger, z. B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden.

Wasser kann bevorzugt durch Trocknung bei 50 bis 150°C entfernt werden. Die Träger können vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Verwendung

Bei dem Klebstoff-film handelt es sich vorzugsweise um einen bei Raumtemperatur permanent klebrigen Klebstoff-film, d. h. um einen Haftklebstoff-film.

Der erfindungsgemäß hergestellte Klebstoff-film, bzw. Haftklebstoff-film eignet sich insbesondere für selbstklebende Artikel. Die selbstklebenden Artikel enthalten insbesondere einen Träger, vorzugsweise den oben genannten, und der darauf beschichteten Zubereitung, welche die Polymerphasen A und B ausbildet.

Der Klebstoff-film, bzw. Haftklebstoff-film hat eine gute Adhäsion (Klebrigkeit) verbunden mit einer guten Kohäsion (innere Festigkeit in der Klebstoffschicht).

Der Klebstoff-film hat vorzugsweise bei 23 °C eine Schälfestigkeit (als Maß für die Adhäsion) von mindestens 1 N/2,5 cm, besonders bevorzugt von mindestens 2 N/2,5 cm, ganz besonders bevorzugt von mindestens 4 N/2,5 cm gemäß nachstehender Meßmethode.

Der Klebstoff-film hat vorzugsweise bei 23 °C einen Quickstick-Wert (als Maß für die Adhäsion) von mindestens 2 N/2,5 cm, besonders bevorzugt von mindestens 3 N/2,5 cm, ganz besonders bevorzugt von mindestens 4 N/2,5 cm gemäß nachstehender Meßmethode.

Die Scherfestigkeit als Maß für die Kohäsion ist vorzugsweise größer als 1 Stunde, besonders bevorzugt größer 5 Stunden, ganz besonders bevorzugt größer 10 Stunden und insbesondere größer 20 Stunden gemäß nachstehender Meßmethode.

Meßmethode:

Die Polymerdispersionen wurden mit einer Auftragsmenge von 25 g/$m^2$ auf Polyethylenterephthalat beschichtet und 3 Minuten bei 90°C getrocknet. Danach wurde das Laminat mit Silikonpapier abgedeckt.
Anschließend wurde die Schälfestigkeit, der Quickstick und die Scherfestigkeit bestimmt.

Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 6,25 $cm^2$ auf Stahl geklebt, mit einer 1 kg schweren Rolle 1 mal angerollt, 10 min gelagert (im Normklima, 50 % rel. Luftfeuchtigkeit 1 bar, 23°C) und anschließend hängend mit einem 1 kg Gewicht belastet (im Normklima). Das Maß für die Scherfestigkeit war die Zeit in Stunden bis zum Abfallen des Gewichts; es wurde jeweils der Durchschnitt aus 3 Messungen berechnet.

Zur Bestimmung der Schälfestigkeit wurde jeweils ein 2,5 cm breiter Prüfstreifen auf einen Prüfkörper aus Stahl geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen, d. h. der Klebestreifen wurde umgebogen und parallel zum Prüfblech abgezogen, und der dazu benötigte Kraftaufwand gemessen. Das Maß für die Schälfestigkeit war die Kraft in N/2,5 cm, die sich als Durchschnittswert aus drei Messungen ergab.

Die Schälfestigkeit wurde 1 Minute nach der Verklebung bestimmt.

Zur Bestimmung der Schlingenprüfung (Loop Tack, Quickstick) wurde aus den Prüfstreifen eine Schlinge geformt und die mit Klebstoff behaftete Seite mit einer Stahloberfläche in Kontakt gebracht. Danach wurde die zum Abziehen der Schlinge von der Stahloberfläche benötigte Maximalkraft (Abzugsgeschwindigkeit 300 mm/min) bestimmt.

Die mit erfindungsgemäß hergestellten Klebstofffilmen erhältlichen selbstklebenden Artikel haben sehr gute Klebeeigenschaften, insbesondere eine gute Adhäsion zu den Substraten und eine hohe Kohäsion (innere Festigkeit in der Klebstoffschicht).

Beispiele

Vergleichsbeispiel 1 (V1):

In einem 2-Liter-Polymerisationsreaktor mit Anker-Rührer und Heiz-/Kühleinrichtung wurde ein Gemisch aus 266 g entionisiertem Wasser und 14.55 g eines 33 gew.-%igen wässrigen Polymerlatex (hergestellt durch radikalisch initiierte Emulsionspolymerisation von Styrol) mit einem gewichtsmittleren Teilchendurchmesser Dw50 von 30 nm unter Stickstoffatmosphäre auf 85°C erhitzt. Dazu wird bei vorgenannter Temperatur 12.0 g einer 7-gewichtsprozentigen wässrigen Lösung von Natriumperoxodisulfat gegeben. Nach 5 Minuten werden Zulauf 1 und Zulauf 2 innerhalb von 3 Stunden zudosiert. Anschließend wird 30 Minuten nachpolymerisiert und schließlich 24 g einer 10%igen Lösung von tert.-Butylperoxid in Wasser sowie 29.3 g einer Acetonbisulfitlösung in Wasser zeitgleich unter Rühren innerhalb einer Stunde zudosiert. Man lässt das System auf Raumtemperatur abkühlen und teilneutralisiert mit 9.8 g 25%igem Ammoniak die Dispersion. Die Dispersion hat einen Feststoffgehalt von 49-52%.

Zulauf 1:

765 g entionisiertes Wasser
37.5 g einer 32%igen wässrigen Lösung des Natriumsalzes des Schwefelsäurehalbesters von mit 30 Ethylenoxideinheiten ethoxyliertem Dodecanol (Disponil FES 77)
5.3 g einer 45%igen Lösung des Natriumsalzes des mit einem C12-C14-Alkylrest und mit zwei Sulfonylresten derivatisierten Diphenylethers (Dowfax 2A1)
36 g Acrylsäure
102 gAcrylnitril
1062 g 2-Ethyl-hexylacrylat

Zulauf 2:

108 g einer 7-gewichtsprozentigen wässrigen Lösung von Natriumperoxodisulfat

Vergleichsbeispiel 2 (V2):

In einem 2-Liter-Polymerisationsreaktor mit Anker-Rührer und Heiz-/Kühleinrichtung wurde ein Gemisch aus 266 g entionisiertem Wasser und 14.55 g eines 33 gew.-%igen wässrigen Polymerlatex (hergestellt durch radikalisch initiierte Emulsionspolymerisation von Styrol) mit einem gewichtsmittleren Teilchendurchmesser Dw50 von 30 nm unter Stickstoffatmosphäre auf 85°C erhitzt. Dazu wird bei vorgenannter Temperatur 12.0 g einer 7-gewichtsprozentigen wässrigen Lösung von Natriumperoxodisulfat gegeben. Nach 5 Minuten werden Zulauf 1 und Zulauf 2 innerhalb von 3 Stunden zudosiert. Anschließend wird 30 Minuten nachpolymerisiert und schließlich 24 g einer 10%igen Lösung von tert.-Butylperoxid in Wasser sowie 29.3 g einer Acetonbisulfitlösung in Wasser zeitgleich unter Rühren innerhalb einer Stunde zudosiert. Man lässt das System auf Raumtemperatur abkühlen und teilneutralisiert mit 9.8 g 25%igem Ammoniak die Dispersion. Die Dispersion hat einen Feststoffgehalt von 49-52%.

Zulauf 1:

765 g entionisiertes Wasser
37.5 g einer 32%igen wässrigen Lösung des Natriumsalzes des Schwefelsäurehalbesters von mit 30 Ethylenoxideinheiten ethoxyliertem Dodecanol (Disponil FES 77)
5.3 g einer 45%igen Lösung des Natriumsalzes des mit einem C12-C14-Alkylrest und mit zwei Sulfonylresten derivatisierten Diphenylethers (Dowfax 2A1)
9 g Acrylsäure
1107 g 2-Ethyl-hexylacrylat
60 g Vinylacetat
24 g Styrol

Zulauf 2: 108 g einer 7-gewichtsprozentigen wässrigen Lösung von Natriumperoxodisulfat

Beispiel 1 (B1):

Eine 50:50 Mischung aus den Dispersionen der Vergleichsbeispiele 1 und 2.

Beispiel 2 (B2):

In einem 2-Liter-Polymerisationsreaktor mit Anker-Rührer und Heiz-/Kühleinrichtung wurde ein Gemisch aus 266 g entionisiertem Wasser und 14.55 g eines 33 gew.-%igen wässrigen Polymerlatex (hergestellt durch radikalisch initiierte Emulsionspolymerisation von Styrol) mit einem gewichtsmittleren Teilchendurchmesser Dw50 von 30 nm unter Stickstoffatmosphäre auf 85°C erhitzt. Dazu wird bei vorgenannter Temperatur 12.0 g einer 7-gewichtsprozentigen wässrigen Lösung von Natriumperoxodisulfat gegeben. Nach 5 Minuten werden Zulauf 1 und Zulauf 2 gestartet. Zulauf

1 wird innerhalb von 1.5 Stunden und Zulauf 2 innerhalb von 3 Stunden zudosiert. Direkt nach Ende von Zulauf 1 wird Zulauf 3 gestartet und in 1.5 Stunden zudosiert.
Anschließend wird 30 Minuten nachpolymerisiert und schließlich 24 g einer 10%igen Lösung von tert.-Butylperoxid in Wasser sowie 29.3 g einer Acetonbisulfitlösung in Wasser zeitgleich unter Rühren innerhalb einer Stunde zudosiert. Man lässt das System auf Raumtemperatur abkühlen und teilneutralisiert mit 9.8 g 25%igem Ammoniak die Dispersion. Die Dispersion hat einen Feststoffgehalt von 49-52%.

Zulauf 1:

382 g entionisiertes Wasser
18.75 g einer 32%igen wässrigen Lösung des Natriumsalzes des Schwefelsäurehalbesters von mit 30 Ethylenoxideinheiten ethoxyliertem Dodecanol (Disponil FES 77)
2.67 g einer 45%igen Lösung des Natriumsalzes des mit einem C12-C14-Alkylrest und mit zwei Sulfonylresten derivatisierten Diphenylethers (Dowfax 2A1)
4.5 g Acrylsäure
553.5 g 2-Ethyl-hexylacrylat
30 g Vinylacetat
12 g Styrol

Zulauf 2:

108 g einer 7-gewichtsprozentigen wässrigen Lösung von Natriumperoxodisulfat

Zulauf 3:

382 g entionisiertes Wasser
18.75 g einer 32%igen wässrigen Lösung des Natriumsalzes des Schwefelsäurehalbesters von mit 30 Ethylenoxideinheiten ethoxyliertem Dodecanol (Disponil FES 77) 2.67 g einer 45%igen Lösung des Natriumsalzes des mit einem C12-C14-Alkylrest und mit zwei Sulfonylresten derivatisierten Diphenylethers (Dowfax 2A1)
18 g Acrylsäure
51 g Acrylnitril
531 g2-Ethyl-hexylacrylat

Anwendungstechnische Prüfung

Die Prüfung wurde gemäß den oben beschriebenen Messmethoden durchgeführt

Tabelle : Ergebnisse

| Polymer | Scherfestigkeit (Stunden) | Quickstick (N/2.5 cm) | Schälfestigkeit (N/2.5 cm) |
|---|---|---|---|
| V1 | Mehr als 100 | 3.1 | 4.1 |
| V2 | 4.4 | 10.8 | 9.6 |
| B1 | 11.4 | 4.5 | 2.7 |
| B2 | Mehr als 100 | 5.6 | 7.3 |

Zur Bestimmung der Struktur der Polymerphasen A und B wurde der getrocknete Klebstoff-Film eingefroren und mittels Ultra-Cryo-Microtomie ein Querschnitt hergestellt. Anschließend wurden die Querschnitte auf Raumtemperatur erwärmt und sofort mittels Rasterkraftmikroskopie (im Tapping© Mode) abgebildet. Die Polymerphasen lassen sich im Messkanal "Phase" (oft auch als Materialkontrast bezeichnet) unterscheiden. Dabei sind sowohl die Abbildungsparameter als auch die Z-Skala (also die Farbdarstellung) so zu wählen, dass ein maximaler Kontrast zwischen den Polymerphasen sichtbar wird.
Die Polymerdispersionen V1, V2, B1 und B2 wurden auf diese Art und Weise präpariert und vermessen. In

den Abbildungen ist jeweils der Messkanal "Phase" dargestellt. Die gezeigten Rasterkraftmikroskopie-Bilder haben eine Kantenlänge von 2μm mal 2μm. Dabei ist in Beispiel B1 (Fig. 2) und B2 (Fig. 1)die bikontinuierliche Struktur beider Polymerphasen zu erkennen wohingegen in Vergleichsbeispiel V2 (Fig. 3) und V1 (Fig. 4) die dunkle Phase jeweils dispers vorliegt.

## Patentansprüche

1. Verfahren zu Herstellung eines Klebstoff-films, der aus mindestens zwei kontinuierlichen Polymerphasen A und B besteht, die jeweils aus einem Polymer oder Polymergemisch A (kurz Polymer A) und einem Polymer oder Polymergemisch B (kurz Polymer B) gebildet werden, **dadurch gekennzeichnet, dass** mindestens eins der Polymere A oder B zunächst als wässrige Polymerdispersion vorliegt und als solche aufgetragen und verfilmt wird.

2. Verfahren gemäß Anspruch 1, **dadurch gekennzeichnet, dass** eine mikroskopische Aufnahme einer beliebig durch den Film gelegten Querschnittsfläche mindestens 10 Flächen % Strukturen zweier kontinuierlicher Polymerphasen zeigt.

3. Verfahren gemäß Anspruch 1 oder 2, **dadurch gekennzeichnet, dass** sich die Glasübergangstemperatur der beiden Polymere A und B um mindestens 15 ° C unterscheidet.

4. Verfahren gemäß einem der Ansprüche 1 bis 3, **dadurch gekennzeichnet, dass** eins der Polymeren A oder B hydrophiler ist als das andere.

5. Verfahren gemäß einem der Ansprüche 1 bis 4, **dadurch gekennzeichnet, dass** der Klebstofffilm dadurch erhältlich ist, dass eins der Polymere A oder B als wässrige Polymerdispersion vorliegt und verfilmt wird und das andere Polymer als Polymerlösung vorliegt und verfilmt wird.

6. Verfahren gemäß einem der Ansprüche 1 bis 5, **dadurch gekennzeichnet, dass** der Klebstofffilm dadurch erhältlich ist, dass mindestens eins der Polymere A oder B als wässriges Emulsionspolymerisat oder als wässrige Sekundärdispersion vorliegt und verfilmt wird.

7. Verfahren gemäß einem der Ansprüche 1 bis 6, **dadurch gekennzeichnet, dass** der Klebstofffilmdadurch erhältlich ist, dass beide Polymere A oder B als wässrige Polymerdispersion vorliegen und verfilmt werden.

8. Verfahren gemäß einem der Ansprüche 1 bis 7, **dadurch gekennzeichnet, dass** der Klebstofffilm dadurch erhältlich ist, dass beide Polymere A oder B als wässriges Emulsionspolymerisat vorliegen und verfilmt werden.

9. Verfahren gemäß einem der Ansprüche 1 bis 8, **dadurch gekennzeichnet, dass** der Klebstofffilm dadurch erhältlich ist, dass eine wässrige Polymerdispersion verfilmt wird und die in der Polymerdispersion dispergierten Polymerteilchen Domänen von Polymer A und Polymer B enthalten (kurz strukturierte Polymerteilchen).

10. Verfahren gemäß Anspruch 9, **dadurch gekennzeichnet, dass** die wässrige Polymerdispersion der strukturierten Polymerteilchen durch mehrstufige Emulsionspolymerisation erhältlich ist.

11. Verfahren gemäß einem der Ansprüche 1 bis 10, **dadurch gekennzeichnet, dass** es sich um einen Haftklebstofffilm, d.h. um einen bei 21 °C permanent klebrigen Film handelt.

## Claims

1. A process for producing an adhesive film which is composed of at least two continuous polymer phases A and B each formed from a polymer or polymer mixture A (polymer A for short) and a polymer or polymer mixture B (polymer B for short), wherein at least one of the polymers, A or B, is present initially in the form of an aqueous polymer dispersion and is applied as such and filmed.

2. The process according to claim 1, wherein a micrograph of any cross-section through the film shows at least 10% by area of structures of two continuous polymer phases.

3. The process according to claim 1 or 2, wherein the glass transition temperature of the two polymers A and B differs by at least 15°C.

4. The process according to any one of claims 1 to 3, wherein one of the polymers, A or B, is more hydrophilic than the other.

5. The process according to any one of claims 1 to 4, wherein the adhesive film is obtainable by filming one of the polymers, A or B, in the form of an aqueous polymer dispersion and filming the other polymer in the form of a polymer solution.

6. The process according to any one of claims 1 to 5, wherein the adhesive film is obtainable by filming at least one of the polymers, A or B, in the form of an aqueous emulsion polymer or in the form of an aqueous secondary dispersion.

7. The process according to any one of claims 1 to 6, wherein the adhesive film is obtainable by filming both polymers A or B in the form of an aqueous polymer dispersion.

8. The process according to any one of claims 1 to 7, wherein the adhesive film is obtainable by filming both polymers A or B in the form of an aqueous emulsion polymer.

9. The process according to any one of claims 1 to 8, wherein the adhesive film is obtainable by filming an aqueous polymer dispersion whose dispersed polymer particles comprise domains of polymer A and polymer B (structured polymer particles for short).

10. The process according to claim 9, wherein the aqueous polymer dispersion of the structured polymer particles is obtainable by multistage emulsion polymerization.

11. The process according to any one of claims 1 to 10, which comprises a pressure-sensitive adhesive film, i.e., a film which is permanently tacky at 21°C.

**Revendications**

1. Procédé de fabrication d'un film adhésif constitué d'au moins deux phases polymères continues A et B, qui sont respectivement formées à partir d'un polymère ou mélange de polymères A (en abrégé polymère A) et d'un polymère ou mélange de polymères B (en abrégé polymère B), **caractérisé en ce qu'**au moins un des polymères A et B se présente tout d'abord sous la forme d'une dispersion de polymère aqueuse et est appliqué en tant que tel et mis sous la forme d'un film.

2. Procédé selon la revendication 1, **caractérisé en ce qu'**une image microscopique d'une section transversale placée à un emplacement quelconque dans le film présente au moins 10 % en surface de structures des deux phases polymères continues.

3. Procédé selon la revendication 1 ou 2, **caractérisé en ce que** la température de transition vitreuse des deux polymères A et B diffère d'au moins 15 °C.

4. Procédé selon l'une quelconque des revendications 1 à 3, **caractérisé en ce qu'**un des polymères A ou B est plus hydrophile que l'autre.

5. Procédé selon l'une quelconque des revendications 1 à 4, **caractérisé en ce que** le film adhésif peut être obtenu **en ce qu'**un des polymères A ou B se présente sous la forme d'une dispersion de polymère aqueuse et est mis sous la forme d'un film et l'autre polymère se présente sous la forme d'une solution de polymère et est mis sous la forme d'un film.

6. Procédé selon l'une quelconque des revendications 1 à 5, **caractérisé en ce que** le film adhésif peut être obtenu **en ce qu'**au moins un des polymères A ou B se présente sous la forme d'un polymère en émulsion aqueuse ou sous la forme d'une dispersion secondaire aqueuse et est mis sous la forme d'un film.

7. Procédé selon l'une quelconque des revendications 1 à 6, **caractérisé en ce que** le film adhésif peut être obtenu

**en ce que** les deux polymères A ou B se présentent sous la forme d'une dispersion de polymère aqueuse et sont mis sous la forme d'un film.

**8.** Procédé selon l'une quelconque des revendications 1 à 7, **caractérisé en ce que** le film adhésif peut être obtenu **en ce que** les deux polymères A ou B se présentent sous la forme d'un polymère en émulsion aqueuse et sont mis sous la forme d'un film.

**9.** Procédé selon l'une quelconque des revendications 1 à 8, **caractérisé en ce que** le film adhésif peut être obtenu **en ce qu'**une dispersion de polymère aqueuse est mise sous la forme d'un film et les particules polymères dispersées dans la dispersion de polymère contiennent des domaines du polymère A et du polymère B (en abrégé particules polymères structurées) .

**10.** Procédé selon la revendication 9, **caractérisé en ce que** la dispersion de polymère aqueuse des particules polymères structurées peut être obtenue par polymérisation en émulsion à plusieurs étapes.

**11.** Procédé selon l'une quelconque des revendications 1 à 10, **caractérisé en ce qu'**il s'agit d'un film adhésif sensible à la pression, c.-à-d. d'un film collant en permanence à 21 °C.

Fig. 1

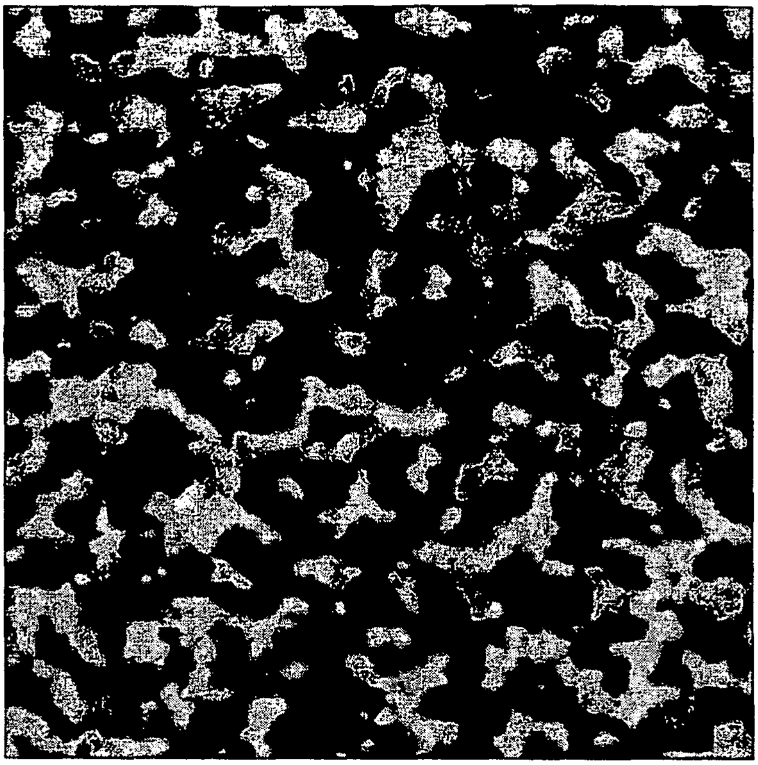

Fig. 2

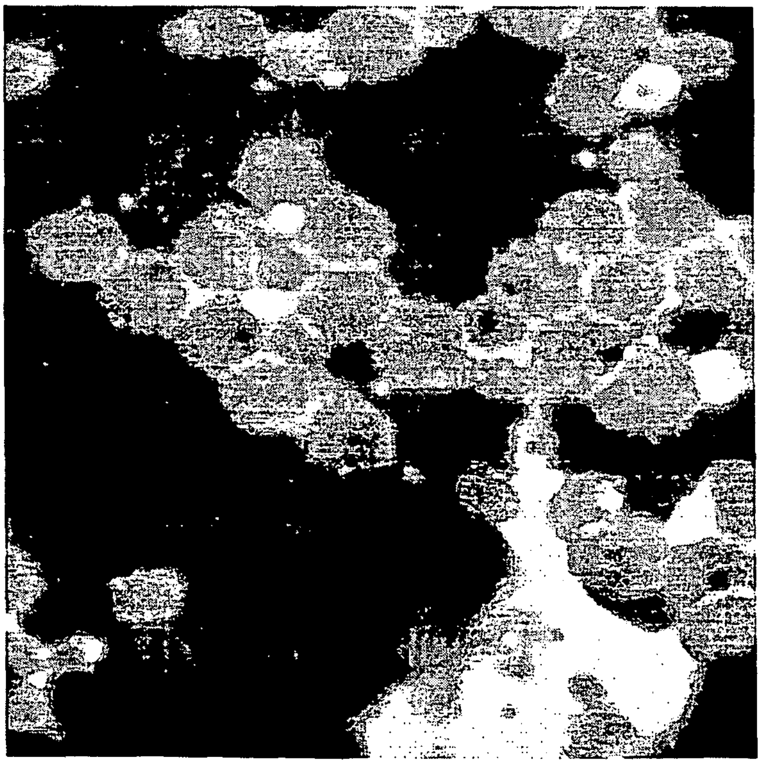

Fig. 3

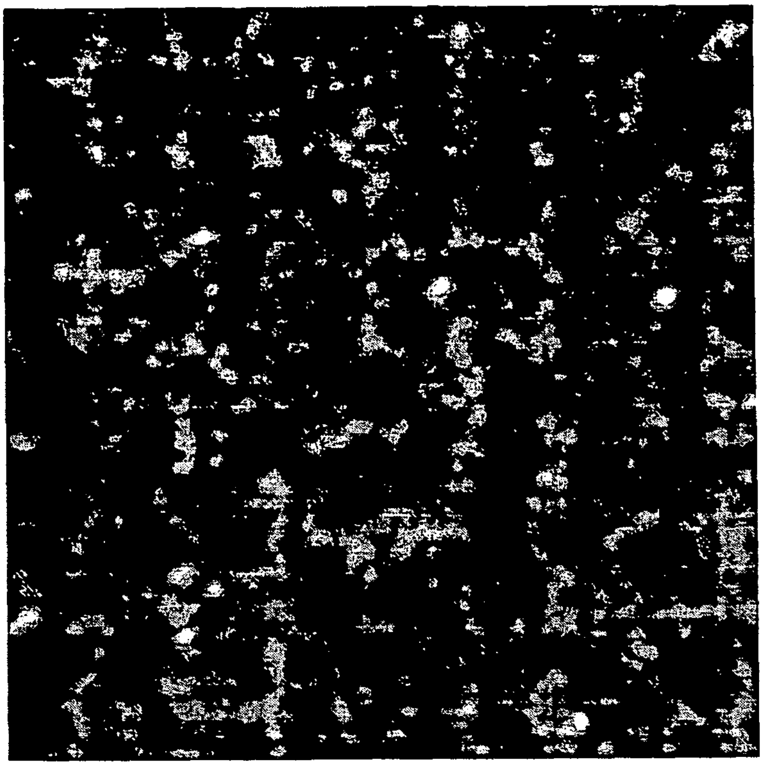

Fig. 4

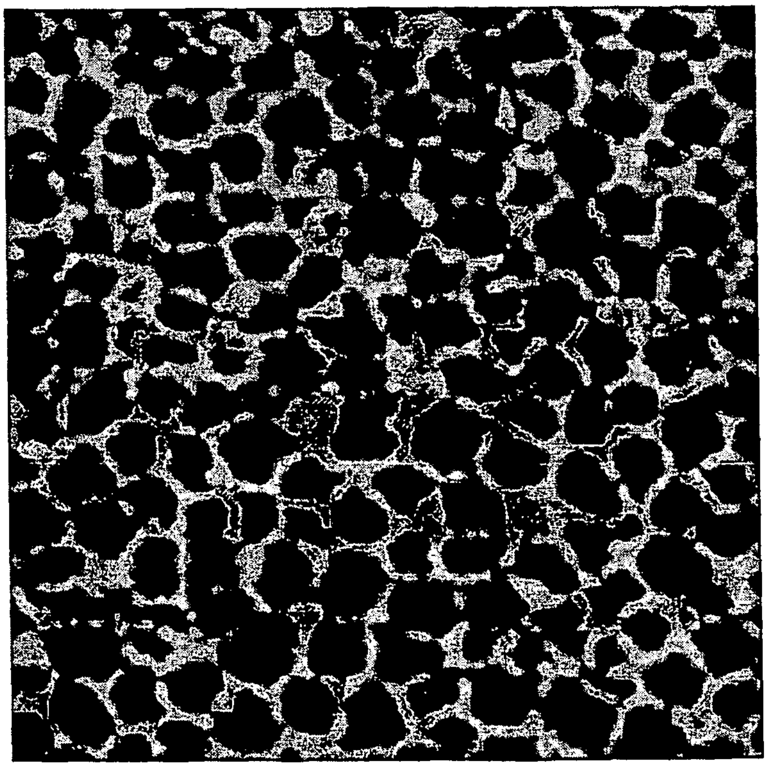

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10323048 A
- EP 625557 A
- US 5670557 A
- US 5356993 A
- EP 1420055 A


### In der Beschreibung aufgeführte Nicht-Patentliteratur


- **S. KIRSCH ; A PFAU ; E.HÄDICKE ; J.LEUNINGER.** *Progress in Organic Coatings,* 2002, vol. 45, 193-204
- Handbook of Polymer Science and Technology. Marcel Dekker, Inc, 1989
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- **W. MÄSCHTLE.** *Makromolekulare Chemie,* 1984, vol. 185, 1025-1039